Europäisches Patentamt

European Patent Office

Office européen des brevets

(11) Publication number: **0 296 271**
**A1**

## EUROPEAN PATENT APPLICATION

(21) Application number: **87109224.3**

(22) Date of filing: **26.06.87**

(51) Int. Cl.⁴: **F03D 3/06**

(43) Date of publication of application:
**28.12.88 Bulletin 88/52**

(84) Designated Contracting States:
**AT BE CH DE ES FR GB GR IT LI LU NL SE**

(71) Applicant: **SERVOTROL - SISTEMAS DE COMANDO AUTOMATICO, LDA.**
**Cidade Lourenco Marques Avenue Praceta A Lote 532, 1st Floor**
**P-1800 Lisbon(PT)**

(72) Inventor: **Dos Reis Cardoso Igreja, Virgilio**
**Cidade Joao Belo Street No. 7-2nd floor, left Lisbon(PT)**

(74) Representative: **Selting, Günther, Dipl.-Ing. et al**
**Deichmannhaus am Hauptbahnhof**
**D-5000 Köln 1(DE)**

(54) Device for the capture and concentration of fluid streams with production of mechanical energy.

(57) A device for the capture and concentration of fluid streams with production of mechanical energy characterized by the fact of being formed by two units (a,b), a first one (a) fixed, consisting of a structure (10) of cylindrical symmetry, bottom and top closed, with peripheral openings along its length which progress in convergent spirals into the structure (10), and a second unit (b), rotative, consisting of a conventional turbine located in the interior of the first unit (a) along its length, with its shaft (15) coincident with the axis of the structure (10) and perpendicular to the normals of the turbine blades (16).

FIG.1

EP 0 296 271 A1

# DEVICE FOR THE CAPTURE AND CONCENTRATION OF FLUID STREAMS WITH PRODUCTION OF ME-CHANICAL ENERGY

The present invention refers to a device for the capture of fluid streams and for their concentration as rotative ones in order that in this form they can act upon the blades of a turbine associated to a mechanical shaft.

Concentrating devices associated to turbines moved by air or water are already known. These devices are double-cone shaped, the turbine being located at an intermediate point of the shaft of the device where the cross-sectional area is minimum. The fluid streams penetrate the device, converge along the first concentrating cone up to the point where the turbine is located, act upon the blades of the turbine and then diverge from this point to expand along the second inverted cone. The effect of such axial concentrators is to increase the efficiency of the turbines to which they are associated in their function of extracting energy from the fluid streams.

These devices show, however, important disadvantages.

In fact, these concentrators are unidirectional in the sense that only the streams of a direction coincident or almost coincident with their axis are efficiently captured and concentrated. If this is not the case, it is necessary to rotate the device until it faces the fluid streams. This is very inconvenient if the fluid is wind or sea water whose streams have a random variability.

On the other hand, the fluid leaves the device at a velocity whose direction is coincident with the direction of the velocity of the fluid acting upon the blades of the turbine to which it is associated, though a with lower amplitude. This means that part of the fluid kinetic energy is not converted in mechanical energy by the turbine.

The present invention does not show such disadvantages.

As a matter of fact, the device is not unidirectional but omnidirectional in the sense that it captures and concentrates the fluid streams which reach the device, whatever the radial direction is in relation to its axis of said streams.

On the other hand, the fluid leaves the device at a velocity whose direction is not coincident with that of the action upon the blades of the turbine but perpendicular to such direction. This fact increases dramatically the fluid kinetic energy not converted into mechanical energy by the turbine, thus decreasing substantially its efficiency.

The present invention consists of a fixed structure of cylindrical symmetry, bottom and top closed, with peripheral openings along its length which progress in convergent spirals into the structure. The fluid streams reaching the structure whatever their radial direction is in relation to the axis of the structure, are trapped and conducted along the spiral conducts, with low energy losses, into the interior of the structure where the fluid is concentrated in rotation. This rotating fluid mass acts upon the blades of a conventional turbine, located at the interior of the structure along its length, with the consequent rotation of its shaft. In this way, the kinetic energy of the captured fluid streams is converted with high efficiency into mechanical energy at the shaft of the turbine.

As illustrative but not limitative examples of systems based on the present invention, reference is made to the following ones.

a) Wind power generator. In this case, the structure is exposed to the wind streams which are captured and concentrated in rotation in the interior of the structure where a turbine associated to an electrical generator is installed.

b) Sea power generator. In this case the structure is immersed into the sea water whose movement due to its streams or waves, causes a mass of water to rotate in the interior of the structure. This rotating mass of water moves a turbine associated to an electrical generator.

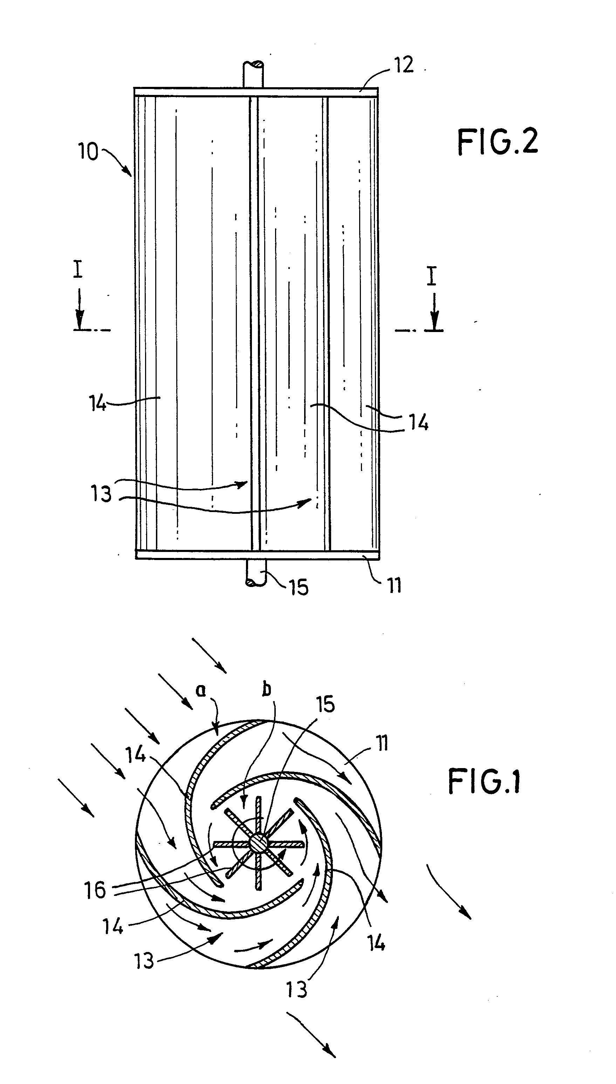

The schematic drawings in the annex are a cross-section of the device (Figure 1) and a side view of the device (Figure 2).

As shown in the figures, the present invention is basically formed by two units. The first unit (a), fixed, is a structure 10 of cylindrical symmetry, bottom 11 and top 12 closed, with peripheral openings 13 along its length which progress in convergent spirals formed by curved walls 14 into the structure 10. The second unit (b), rotative, is a conventional turbine located in the interior of the first unit 10 along its length, and whose shaft 15 coincides with the axis of the structure 10 and is perpendicular to the normals of the turbine blades 16 in such a way that the fluid streams which reach the structure 10 whatever their radial directions are in relation to the axis of the structure 10, are trapped and conducted along the spiral conducts 14 with low energy losses into the interior of the structure 10, where a mass of fluid is concentrated in rotation acting upon the blades 16 of the turbine (b), with the consequent rotation of its shaft 15 and converting, in this way and with high efficiency, the kinetic energy of the fluid streams into mechanical energy at the shaft 15 of the turbine (b).

## Claims

1. Device for the capture and concentration of fluid streams with production of mechanical energy characterized by the fact of being formed by two units (a,b), a first one (a) fixed, consisting of a structure (10) of cylindrical symmetry, bottom and top closed, with peripheral openings along its length which progress in convergent spirals into the structure (10), and a second unit (b), rotative, consisting of a conventional turbine located in the interior of the first unit (a) along its length, with its shaft (15) coincident with the axis of the structure (10) and perpendicular to the normals of the turbine blades (16).

2. Device according to claim 1, characterized in that the structure (10) is exposed to the wind streams, when used as a wind power generator, in such a way that said streams are captured and concentrated in rotation in the interior of the structure (10) and act upon the turbine (b) associated to a conventional electrical power generator.

3. Device according to claim 1, characterized in that the structure (10) is immersed into the sea water, when used as a sea power generator, in such a way that the water movement, due to the sea streams or sea waves, causes in the interior of the structure (10) a mass of water to rotate and act on the turbine (b) associated to a conventional electrical power generator.

FIG.2

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PT-A- 82 749 (SERVOTROL)<br>* Whole document *<br>----- | 1-3 | F 03 D 3/06 |

TECHNICAL FIELDS
SEARCHED (Int. Cl.4)

F 03 D

The present search report has been drawn up for all claims

| Place of search | Date of completion of the search | Examiner |
|---|---|---|
| THE HAGUE | 12-02-1988 | THIBO F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
& : member of the same patent family, corresponding
   document

EPO FORM 1503 03.82 (P0401)